**Europäisches Patentamt**

**European Patent Office**

**Office européen des brevets**

(11) Veröffentlichungsnummer: **0 014 353**
**A1**

(12) # EUROPÄISCHE PATENTANMELDUNG

(21) Anmeldenummer: 80100231.2

(22) Anmeldetag: 18.01.80

(51) Int. Cl.³: **A 22 C 13/00**
**B 29 C 27/00**

(30) Priorität: 27.01.79 DE 2903116

(43) Veröffentlichungstag der Anmeldung:
20.08.80 Patentblatt 80/17

(84) Benannte Vertragsstaaten:
AT BE DE FR NL

(71) Anmelder: Gerhard Peter KG
Poststrasse 13
D-3036 Bomlitz II(DE)

(72) Erfinder: Peter, Gerhard
Poststrasse 13
D-3036 Bomlitz II(DE)

(54) **Verfahren zur Herstellung einer Schlauchhüllenkupplung und die Verwendung der gekuppelten Schlauchhüllen als Verpackungsmittel.**

(57) Verfahren zur Herstellung von Schlauchhüllenkupplungen, indem ein Stück Kupplungsfolie um zwei benachbarte miteinander zu verbindende Schlauchhüllenendstücke von außen heißnaßfest aufgeklebt und/oder aufgesiegelt und die gekuppelte Schlauchhülle gewendet wird und die Verwendung der gekuppelten Schlauchhülle als Verpackungsmittel.

EP 0 014 353 A1

0014353

-1-

# GERHARD PETER KG

3036 Bomlitz
Str/W

Verfahren zur Herstellung einer Schlauchhüllenkupplung
und die Verwendung der gekuppelten Schlauchhüllen als
Verpackungsmittel

Hüllenverbindungen insbesondere in Form von Schlauchhüllenkupplungen sind bereits aus der FR-PSA 75 27 312
(23 22 732) bekannt. Bei sämtlichen aus den dortigen
Figuren 1 bis 12 ersichtlichen Arten von Schlauchhüllenkupplungen ist um die beiden gekuppelten Schlauchhüllenenden außen ein Hüllenmanschettenumschlag angeordnet.

Will man eine derartig gekuppelte Schlauchhülle z.B. für
den Fall, daß die Schlauchhülle zur Aufnahme von Nahrungsmitteln vorgesehen ist, entsprechend füllen, geschieht
dies auf den heute weitgehend verbreiteten automatischen
Füll- und Schließmaschinen, wie sie z.B. in der
DE-OS 27 21 392 beschrieben sind. Bei Passieren der
üblicherweise zur Verbesserung des Füllvorgangs eingesetzten sogenannten "Darmbremse" erfolgt bei Verwendung der bekannten mit Außenmanschette versehenen Schlauchkupplungen bei deren Passieren durch die o.a. Darmbremse meist ein Kupplungsabriß, wodurch der automatische taktorientierte Füllvorgang oft für längere Zeit unterbrochen wird. Die vorgenannten Darmbremsen sind bereits seit etwa 15 Jahren insbesondere als Verbesserungsmittel bei der Schlauchhüllenfüllung mit Wurstwaren eingesetzt, ohne daß bis heute eine die vorstehenden Nachteile vermeidende Verbesserung an Schlauchhüllenkupplungen bekanntgeworden ist. Aufgrund der hieraus resultierenden Aufgabe der Schaffung einer verbesserten, auch die sogenannten Darmbremsvorrichtungen einwandfrei passierenden Schlauchkupplung wird zur Lösung dieser Aufgabe hiermit ein Verfahren zur Herstellung einer sogenannten Wendeschlauchhüllenverbindung vorgeschlagen, wobei in einfachster Weise insbesondere wie aus den Figuren 3 und 4 der vorstehenden französischen Patentschrift 75 27 312 bekanntgewordene Kupplungsstückfolie mittels geeigneter handelsüblicher Wendevorrichtungen gewendet wird, wodurch die außenmanschettenverdickungsbedingte Wulstbildung an den Kupplungsstücken und die dadurch in der Darmbremse verursachten Schlauchhüllenabrisse weitgehend vermieden werden. Dieses einfache Herstellungsverfahren einer entsprechend vorteilhaften Kupplungsstückfolie ist dadurch gekennzeichnet, daß die Kupplungsstückfolie zur haftfesten Überlappungskupplung zweier

0014353

benachbarter untereinander zu verbindender Schlauchhüllenendstücke um diese herum außen heißnaßfest aufgeklebt und/oder aufgesiegelt wird und die so gekuppelte
Schlauchhülle anschließend gewendet wird.

Obwohl wegen der seit langem in Betrieb befindlichen
Darmbremsen und wegen der in sehr großem Ausmaß mit Hilfe
dieser Darmbremsen unter Verwendung der Schlauchhüllen
erfolgenden Wurstherstellung ein erheblicher Bedarfsdruck zur Abstellung der vorgenannten Nachteile seit
einer Reihe von Jahren bestand und obwohl sogar Wendeeinrichtungen für derartige Schlauchhüllen seit langem
bekannt sind, vergleiche DE-PS 14 79 836, offengelegt
am 29.3.1969, lag es offenbar nicht nahe, in Kenntnis
einerseits der vorstehenden Mängel und andererseits
geeigneter Wendevorrichtungen diesen sehr störenden
Mange zu beheben. Dabei war das Verbinden bzw. Kuppeln
von Schlauchhüllenenden eine fertiggungstechnische Notwendigkeit, da man auch heute noch in erheblichem
Umfang Schlauchhüllen nur in endlichen Längen herstellen
kann. Ist dabei die Schlauchhüllenfertigungslängen nicht
exakt ein ganzzahliges Vielfaches der gewünschten später
daraus zu fertigenden Raffraupen, so ergeben sich notwendigerweise Schlauchverbindungsstellen in Form von
Schlauchhüllenkupplungen, die bis heute mit handelsüblichen außen aufgebrachten Klebebändern (siehe
französische Patentschrift) bewerkstelligt werden.
Diese Kupplungen ergeben wegen ihrer Außenwulstbildung
eine starke Hemmung in den o.a. Darmbremsen und unterbrechen damit mit Sicherheit den automatischen Abfüllprozeß auf den handelsüblichen Füll- und Clipmaschinen.

WWP 5191

- 4 -

0014353

Bisher mußten daher derartige Klebebandkupplungen aus den Raffraupen herausgeschnitten werden oder von vornherein nicht mitgerafft werden. Das bedeutete in jedem Fall Schlauchhüllenabfall sowie Produktionsausfall beim Abfüllen auf den automatischen Füllmaschinen. Dies kann anhand folgenden kurzen Beispiels näher erläutert werden:

Es sind zwei Schlauchhüllen von je etwa 110 m Länge zu Schlauchraupen von je 20 m der Ursprungsschlauchlänge zu raffen. Das bedeutet, daß 10 Raffraupen ohne Kupplungen erhalten werden, jedoch eine Raffraupe mit Kupplung. Damit erhält man im statischen Mittel 10 % Abfall, wenn die Schlauchhüllen bei ihrer Füllung mit Außenwulstkupplung in der Darmbremse abreißen. Bei 30.000 bis 40.000 m in den taktkontinuierlichen automatischen Füll-, Clip- und Abbindemaschinen verarbeiteten Schlauchhüllenlängen sind diese 3.000 bis 4.000 m Abfall. Erst in Kenntnis auch dieser Tatsache rechfertigt sich die unerwartete erfindungsgemäße Lösung, welche in einfachster Weise durch Schaffung dieser sogenannten Wendeschlauchhüllenverbindung den vorstehend skizzierten Mangel weitgehend beseitigt. Hierbei ist insbesondere erfindungswesentlich, daß bei heißnaßfester Kupplungsstückaußenaufklebung hierzu ein an sich bekannter üblicher Cyanoacrylatklebstoff auf die innenseitigen Fläche der Kupplungsstückfolie vor deren Verklebung mit den beiden zu verbindenden Schlauchhüllenendstücken aufgebracht wird. Für den Fall, daß man ohne Zwischenlagerungszeit die in der erfindungsgemäßen Weise hergestellten Wendeschlauch-

WWP 5191

hüllenverbindungen zur Weiterverarbeitung einsetzen will, ist mit Rücksicht auf die oft sehr unterschiedlichen Aushärtezeiten des an sich recht guten Cyanoacrylatklebstoffs alternativ ein anderer Klebstoff einzusetzen, der in sehr kurzer Zeit aushärtet. Handelsübliche Klebstoffe dieses Schnellaushärttyps sind aus der Gruppe auszuwählen, zu der u.a. der Klebstoff Sicomet 77$^{®}$ gehört. Dieser Sicomet-Klebstoff wird im übrigen genauso im Rahmen des erfindungsgemäßen Verfahrens eingesetzt wie der Cyanoarylatklebstoff. Man kann auch neben den optimal hier verwendbaren Sicomet 77-Klebstoff andere bekannte Klebstoffe, wie z.B. einen Zweikomponentenkontaktklebstoff auf Polyurethanbasis einsetzen.

Das erfindungsgemäße Verfahren ist aber auch nicht nur mit Hilfe einer gewendeten Verklebung, sondern auch mit Hilfe einer gewendeten Versiegelung sehr vorteilhaft dann durchzuführen, wenn es sich bei den zu verbindenden Schlauchhüllen um ggf. faserverstärkte Celluloseregenerathüllen mit außen aufgebrachter Siegelschicht, z.B. in Form von Polyvinylidenhalogenidcopolymerisaten handelt. Diese werden in großem Umfang nach der Außenbeschichtung gewendet und dann als somit innenbeschichtete Schlauchhüllen der weiteren Verarbeitung bzw. weiteren Verwendung zugeführt. Man kann daher das erfindungsgemäße Verfahren zur Herstellung einer Wendehüllenverbindung so modifizieren, daß bei derartiger Kupplungsstückaußenaufsiegelung hierzu eine aus einer siegelfähigen Substanz bestehend oder mit einer siegelfähigen Substanz beschichtete Kupplungsstückfolie mit der siegelnden Seite auf die außenliegende Siegelschicht der zu verbindenden Schlauchhüllenendstücke überlappend umfassend gelegt und unter Druck und/oder

WWP 5191

Wärmebeaufschlagung in an sich bekannter Weise miteinander flächenversiegelt und anschließend die so verbundenen Hüllenstücke gewendet werden. Bevorzugt ist die Verwendung einer aus der siegelfähigen Substanz bestehenden oder die siegelfähige Substanz in ausreichender Menge in der Schicht enthaltenden Kupplungsstückfolie. Ist die siegelfähige Substanz dann noch die gleiche wie die auf der Außenseite der zu wendenden Hülle aufgebrachte Siegelsubstanz, werden dadurch optimale Sigelbedingungen wie auch später optimale Bedingungen für die Wasserdampfdichte und die verringerte Gaspermeation für die fertige gewendete Schlauchhülle geschaffen, die dann auch im Bereich ihres Kupplungsstücks das darin verpackte Gut optimal möglichst wasserdampf- und gasdicht schützt. Das erfindunsgemäße Verfahren ist auch in einer weiteren Modifikation vorteilhaft in der Weise zu verwenden, daß bei fehlender außenliegender Siegelschicht der zu verbindenden Schlauchhüllenendstücke eine mit einem Einstrichhaftgleitlack, wie er beispielsweise in der DE-PS 20 34 257 oder in der DE-OS 27 25 586 beschrieben ist, überzogene oder daraus bestehende Kupplungsstückfolie verwendet wird.

Nach dem erfindungsgemäßen Verfahren gekuppelte Schlauchhüllen lassen sich überraschend gut als Verpackungsmittel zur Herstellung von leeren oder auch mit einzuhüllenden Gütern gefüllten abgebunden verschlossenen Raumformeinheiten verwenden. Ein derartiges Verfahren ist, auch wenn es von nichtgerafften Schlauchhüllen ausgeht, u.a. aus der DE-OS 27 21 392 zu ersehen. Die nach dem erfindungsgemäßen Verfahren hergestellten gekuppelten Schlauchhüllen lassen sich außerdem auch recht gut zur Herstellung von leeren und/oder gefüllten Schlauchketten verwenden, wie sie beispieslweise in der DE-OS 27 32 919 beschrieben sind. Ähnlche Verwendungen der erfindungsgemäß hergestellten gekuppelten Schlauchhüllen führen zu abgeteilten, vereinzelten und mit Nahrungsmitteln gefüllten Verpackungseinheiten in Form von Würsten, wie sie beispielsweise in der DE-OS 23 46 134 insbesondere im Hinblick auf ihren Verschluß beschrieben sind. Eine weitere Verwendung gestattet auch die Herstellung von füllgutkonservierenden Verpackungseinheiten, z.B. gemäß der DE-OS 25 05 672. Als Spezialgebiet ist die Verwendung der erfindunsgemäß hergestellten gekuppelten Schlauchhüllen zur Herstellung von Wurstattrapen, z.B. gemäß der DE-OS 27 27 271 anzusehen.

Im Rahmen der Ausübung des erfindunsgemäßen Verfahrens kann zur äußeren Aufbringung der entsprechenden Schlauchkupplungsstücke in Ergänzung der aus der vorgenannten französischen Patentschrift 75 27 312 entnehmbaren technischen Lehre empfohlen werden, daß man Schlauchhüllenkupplungsstücke in einer Breite von im Mittel 36 mm bei einer Siegeltemperatur von 170°C, einem Siegeldruck von 4 atü mit einer Siegelzeit von 4 sec. bei flachgelegten zu verbindenden Schlauchhüllenendstücken aufsiegelt und dann die durch Siegelung fest miteinander verbundenen Schlauchhüllenendstücke mit Hilfe einer Schlauchwendevorrichtung, wie sie in der DE-PS 14 79 836 beispielsweise beschrieben ist, wendet. Zur Ausübung des erfindungsgemäßen Verfahrens zur Herstellung einer Wendehüllenverbindung eignen sich die verschiedensten Schlauchhüllensubstanzen, insbesondere aber solche, die außen siegelfähig sind und anschließend gewendet ewrden. Derartige Schlauchhüllen sind u.a. beschrieben in der DE-AS 13 02 384 und in der DE-OS 25 39 706.

Andere Schlauchhüllen, die an sich überwiegend hydrophob sind und außerdem nicht mit einer äußeren Siegelschicht überzogen sind, können trotzdem nach dem erfindungsgemäßen Verfahren dann verarbeitet werden, wenn man Schlauchhüllen aus Polyamidsubstanzen einsetzt, wie sie beispielsweise in der DE-OS 17 70 406, DE-OS 18 16 599 und DE-OS 19 65 479 beschrieben sind.

Zur Verbesserung der Haftfestigkeit zwischen diesen überwiegend hydrophoben Polyamidsubstanzen einerseits und der siegelfähigen Kupplungsstücksubstanz andererseits kann man im Bedarfsfall die polyamidhaltige Folie wie im übrigen auch jede für das vorliegende erfindungsgemäße Verfahren andere geeignete Folie einer elektrischen Vorbehandlung unterwerfen, die in üblicher Weise mit den hierzu bekannten Geräten, wie sie beispielsweise in der DE-PS 11 83 232, dem DE-GBM 19 72 580 oder der DE-OS 16 15 505 beschrieben sind, durchführbar ist. Zur weiteren Verbesserung der Haftfestigkeit kann außerdem noch nach der Coronabehandlung ein Haftvermittler entweder auf die coronabehandelte zu verbindende Schlauchhülle oder aber auch ein Haftvermittler auf das Kupplungsstück aufgebracht werden. Geeignete Haftvermittler sind z.B. in der DE-AS 16 46 200, DE-OS 15 94 317 oder DE-OS 22 09 242 beschrieben. Ist die zu verbindende Schlauchhüllenfolie wenigstens überwiegend aus Polyolefinen aufgebaut, sind andere Haftvermittler zu empfehlen. Eine geeignete Polyolefinfolie mit einem geeigneten Haftvermittler, der PVDC-Siegelschichten mit Sicherheit gut bindet, ist beschrieben u.a. in der DE-OS 24 23 423.

WWP 5191

0014353

Andere Haftvermittler binden sowohl Polyolefinfolien wie auch Polyamidfolien. Ein derartiger Haftvermittler ist z.B. in der DE-OS 20 20 344 beschrieben.

Die nach dem erfindüngsgemäßen Verfahren hergestellten Wendeschlauchhüllenverbindungen lassen sich wie übliche gewendete Schlauchhüllen mittels Rafforganen, wie sie beispielsweise in der DE-PS 12 53 093 beschrieben sind, ohne weiteres zu Raffraupen der verschiedensten Arten gemäß der DE-GbMs 72 08 045, 19 89 723, 73 35 135 und 77 23 313 verarbeiten. Auch die Weiterverarbeitung zu gefüllten, vereinzelten und abgebundenen verschlossenen Raumformeinheiten z.B. vorzugsweise mit Nahrungsmitteln gefüllten Verpackungseinheiten ist mit Hilfe der nach dem erfindungsgemäßen Verfahren hergestellten Wendeschlauchhüllen optimal möglich. Hierbei lassen sich ohne weiteres Förder-, Füll- und Verschließungsverfahren für Schlauchhüllen anwenden, wie sie beispielsweise aus der DE-OS 27 21 392 zu ersehen sind. Die erfindugnsgemäß hergestellten Schlauchkupplungen überstehen auch Methoden, wie sie zur Herstellung von füllgutkonservierenden Verpackungseinheiten, u.B. gemäß der DE-OS 25 05 672 erforderlich sind, ohne weitere Schwierigkeiten. Auch Spezialabbindungen, z.B. gemäß der DE-PS 23 46 134, die zu optimal verschlossenen gefüllten Wursthüllen führen, lassen sich mit dem nach dem erfindungsgemäßen Verfahren hergestellten Wendeschlauchhüllenverbindungen verwirklichen. Selbst Spezialverarbeitungen z.B. zur Wurstattrappen, wie diese beispielsweise aus der DE-OS 27 27 271 ersichtlich sind, sind leicht zu verwirklichen.

WWP 5191

Insgesamt kann davon ausgegangen werden, daß aufgrund der verblüffend einfachen Beseitigung des Außenringwulsts an den Schlauchhüllenkupplungsstellen sämtliche Weiterverarbeitungen, die die Außenflächen der Schlauchhüllen mechanisch relativ stark beanspruchen, nunmehr infolge der Wendung der Schlauchhüllenkupplung von außen nach innen ohne weiteres von der Schlauchhülle ertragen werden, ohne daß sie an der Kupplungsstelle abreißt oder sich öffnet. Durch diesen trotz der bereits bekannten oben beschriebenen Maßnahmen unerwarteten und überraschenden Effekt wird, wie oben beschrieben, mittels erheblicher Abfalleinsparung ein besonderer technischer Vorteil erzielt. Die nach dem erfindungsgemäßen Verfahren hergestellten gekuppelten Schlauchhüllen sind nämlich nicht nur beständig gegen die Belastungen durch das Raffen und durch das Füllen mit Hilfe der Darmbremse, sondern sind auch beständig für den Nachfolgeverarbeitungsprozeß, bei dem insbesondere die Verarbeitungsschritte des Brühens bei 80°C während einer Stunde sowie das anschließende Abschrecken und das Lufttrocknen besondere Belastungen für die Schlauchhülle darstellen. Auch hier zeigt sich, daß sie nach dem erfindungsgemäßen Verfahren hergestellte Schlauchhüllenkupplung gegenüber diesen Belastungen beständig ist.

Selbstverständlich ist es im Rahmen der Ausübung des erfindungsgemäßen Herstellungsverfahren sowohl möglich, zwei Schlauhhüllenendstücke, deren parallel laufende Kantquer zur Schlauchhüllenlauftrichtungsachse verlauten, mittels Kupplungsstückfolie zu verwenden und

0014353

dann das Ganze zu wenden, als auch zwei Schlauchhüllenendstücke, deren aneinanderstoßende Schlauchhüllenendkanten nicht quer, sondern im Winkel dazu, also schräg, also optimal in einem Winkel von 45° zu gedachten Schlauchhüllenachse bzw. Schlauchhüllenförderrichtung verlaufen, mittels Kupplungsstückfolie in gleichguter Weise zu verbinden und dann die so verbundene gekuppelte Schlauchhülle zu wenden.

Mit Rücksicht auf nie ganz auszuschließende Kaliberschwankungen besitzt die zunächst außen angebrachte und dann mit der Schlauchhülle gewendete und dadurch innenliegende Kupplungsmanschette eine so breite Überlappungszone mit sich selbst, daß auch im Kupplungsbereich die Dichtigkeit der Schlauchhülle voll gesichert ist.

0014353

## Patentansprüche

1. Verfahren zur Herstellung einer Wendeschlauchhüllenverbindung mittels Kupplungsstückfolie, dadurch gekennzeichnet, daß die Kupplungstückfolie zur haftfesten Überlappungskupplung zweier benachbarter miteinander zu verbindender Schlauchhüllenendstücke um diese herum außen heißnaßfest aufgeklebt und/oder aufgesiegelt wird und die so gekuppelte Schlauchhülle anschließend gewendet wird.

2. Verfahren zur Herstellung einer Wendehüllenverbindung nach Anspruch 1, dadurch gekennzeichnet, daß bei heißnaßfester Kupplungsstückaußenaufklebung hierzu ein an sich bekannter üblicher Cyanoacrylatklebstoff wenigstens auf im wesentlichen der gesamten innenseitigen Fläche der Kupplungsstückfolie vor deren Verkleben mit den beiden miteinander zu verbindenden Schlauchhüllenendstücken aufgebracht wird.

3. Verfahren zur Herstellung einer Wendehüllungverbindung nach Anspruch 1, dadurch gekennzeichnet, daß bei heißnaßfester Kupplungsstückaußenaufklebung hierzu ein an sich bekannter üblicher Klebstoff des Typs Sicomet 77® oder ein Zweikomponentenkontakt-klebstoff auf Polyurethanbasis wenigstens auf im wesentlichen der gesamten innenseitigen Fläche der Kupplungsfolie vor deren Verklebung mit den beiden miteinander zu verbindenden Hüllenendstücken auf-gebracht wird.

WWP 5191

4. Verfahren zur Herstellung einer Wendehüllenverbindung nach Anspruch 1, dadurch gekennzeichnet, daß bei Kupplungsstückaußenaufsiegelung hierzu eine aus einer siegelfähigen Substanz bestehende oder mit einer siegelfähigen Substanz beschichtete Kupplungsstückfolie mit der siegelnden Seite auf die außenliegende Siegelschicht der zu verbindenden Schlauchhüllenendstücke überlappend umfassend gelegt und unter Druck und/oder Wärmebeaufschlagung in an sich bekannter Weise miteinander flächenversiegelt und anschließend die so verbundenen Hüllenstücke gewendet werden.

5. Verfahren zur Herstellung einer Wendehüllenverbindung nach Anspruch 4, dadurch gekennzeichnet, daß bei fehlender außenliegender Siegelschicht der zu verbindenden Schlauchhüllenendstücke eine mit einem Einstrichhaftgleitsiegellack überzogene oder daraus bestehende Kupplungsstückfolie verwendet wird.

6. Verwendung der nach Anspruch 1 bis 5 hergestellten Schlauchhüllen als Verpackungsmittel.

7. Verwendung der nach Anspruch 1 bis 5 hergestellten Schlauchhüllen zur Herstellung von leeren und/oder gefüllten Schlauchketten, von abgeteilten und vereinzelten, mit Nahrungsmitteln gefüllten Verpackungseinheiten, zur Erzeugung von füllgutkonservierenden Verpackungseinheiten, zur Bildung von Wursttrappen oder zur Verpackung von technischen Gütern.

WWP 5191

0014353

**Europäisches Patentamt**

**EUROPÄISCHER RECHERCHENBERICHT**

Nummer der Anmeldung

EP 80 10 0231

| | EINSCHLÄGIGE DOKUMENTE | | KLASSIFIKATION DER ANMELDUNG (Int.Cl ²) |
|---|---|---|---|
| Kategorie | Kennzeichnung des Dokuments mit Angabe, soweit erforderlich, der maßgeblichen Teile | betrifft Anspruch | |
| | DE - A - 2 111 878 (HYDRA PHAN)  * Seite 3, Zeilen 5-7; Seite 5, Zeile 5; Figuren * -- | 1-7 | A 22 C 13/00 B 29 C 27/00 |
| D | FR - A - 2 322 732 (VISCORA) | | |
| A | US - A - 3 112 516 (BONNEE) | | |
| A | US - A - 3 503 093 (MARBACH) | | |
| A | US - A - 3 799 823 (TALTY) | | |
| A | DE - A - 679 748 (KUNZE) | | |
| | ---- | | |

RECHERCHIERTE SACHGEBIETE (Int. Cl. ³)

A 22 C
B 29 C
B 29 H

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 13-05-1980 | CORDENIER |

EPA form 1503.1  06.78